# EUROPEAN PATENT SPECIFICATION

(11) **EP 2 615 386 B1**
(45) Date of publication and mention of the grant of the patent: **15.04.2020**
(21) Application number: 12182714.1
(22) Date of filing: 03.09.2012
(51) Int. Cl.: F24F 1/00, F24F 11/00

(54) **Indoor unit of air-conditioning apparatus**
Innenraumeinheit einer Klimaanlagenvorrichtung
Unité intérieure de climatiseur

(30) Priority: 10.01.2012 JP 2012002083; 29.03.2012 JP 2012077031
(43) Date of publication of application: 17.07.2013
(73) Proprietor: Mitsubishi Electric Corporation, Chiyoda-ku Tokyo 100-8310 (JP)
(72) Inventor: Matsumoto, Takashi, Tokyo, 100-8310 (JP)
(74) Representative: Ilgart, Jean-Christophe

(56) References cited:
- EP-A2- 2 206 983
- WO-A1-2008/152862
- WO-A1-2011/043038
- JP-A- 2011 080 685
- JP-A- 2011 099 609

## Description

### [Technical Field]

The present invention relates to indoor units of air-conditioning apparatuses, and more specifically, it relates to an indoor unit of an air-conditioning apparatus capable of changing the blowing direction of conditioned air.

### [Background Art]

Indoor units of air-conditioning apparatuses (hereinafter referred to as "indoor units") are known that detect the position of a person in the room (hereinafter referred to as a "person inside the room") and blow air in a direction other than the direction of the person inside the room, or instead blow air toward the person inside the room, in order to increase the comfort of the person inside the room.

Also, an indoor unit has been disclosed that not only detects the position of a person inside the room but also detects the activity state of the person inside the room and controls the temperature, the blowing amount, and the blowing direction of conditioned air on the basis of the activity state. More specifically, if the activity level of the person is determined to be high due to the person having performed some exercise or physical work, the indoor unit blows air intensively toward the person inside the room (hereinafter referred to as a "user") so as to remove the amount of heat generated by the activities. Thus, the indoor unit prevents a rise in body temperature and prevents the user from feeling hot (see Patent Literature 1, for example).

### [Citation List]

### [Patent Literature]

[Patent Literature 1] Japanese Unexamined Patent Application Publication No. 6-323599 (Pages 3-5, Fig. 2)

### [Summary of Invention]

### [Technical Problem]

The indoor unit disclosed in Patent Literature 1 is configured to blow air intensively toward a user when the activity level of the user is determined to be high. That is, the activity level of the user is low immediately after the user took a bath or immediately after the user entered the room from the hot (or cold) outside, and hence the indoor unit determines that the activity level of the user is not high. Therefore, the indoor unit cannot respond to the desire of the user to temporarily and quickly cool the user down (or warm the user up) immediately after the user took a bath or immediately after the user entered the room from the hot (or cold) outside.

Also, the user needs to operate the remote controller or the like and activate the indoor unit (refrigeration cycle) immediately after taking a bath or immediately after entering the room from the hot (or cold) outside. Looking for the remote controller and operating the remote controller or the like are annoyed, which reduces promptness.

Moreover, the user needs to operate the remote controller or the like to stop blowing of air (refrigeration cycle) when the user is cooled down (warmed up), which is annoying.

In addition, a wireless remote controller is often moved from one place to another, and if the user loses the remote controller, the user needs to find the remote controller, which is also annoying.

Another prior art document, WO 2011/043 038, describes an air conditioner, in which an indoor unit is provided with an image-capturing device, and the image-capturing device is provided with: a human body-detecting means which detects whether or not a human being is present; and an obstacle-detecting means which detects whether or not an obstacle is present. An air flow direction-changing means provided to the indoor unit is controlled on the basis of the result of the detection by the human body-detecting means and on the basis of the result of the detection by the obstacle-detecting means. Specifically, at least one obstacle position-detecting region belongs to each human being position-determining region. When it is determined that there is an obstacle in an obstacle position-determining region which is located in front of a human being position-determining region in which it is determined that there is a human being, a vertical blade is controlled to perform air flow control by which air flows above the obstacle to avoid the obstacle.

The present invention has been made to overcome the problems described above. A first object of the present invention is to provide an indoor unit of an air-conditioning apparatus that is capable of easily and quickly activating a refrigeration cycle, and capable of responding to the desire of a user to easily and quickly cool the user down (or warm the user up) immediately after the user took a bath or immediately after the user entered the room from the hot (or cold) outside. A second object of the present invention is to provide an indoor unit of an air-conditioning apparatus that is capable of easily letting the user know where the remote controller is.

### [Solution to Problem]

The invention is more particularly disclosed in claim 1.

An indoor unit of an air-conditioning apparatus according to the present invention includes: a main body having an air inlet and an air outlet, and disposed on a wall of a room; a fan configured to form an air passage that suctions air from the air inlet and extends to the air outlet; a heat exchanger configured to execute a part of a refrigeration cycle; a wind direction regulating device configured to regulate a blowing direction of air conditioned by the heat exchanger; an imaging device configured to image an inside of the room; and a controller configured to control the wind direction regulating device on the basis of information regarding a person imaged by the imaging device; wherein the controller is configured to execute: a face recognition step of recognizing a face of a person if the face of the person has been within a face recognition range in a view range of the imaging device for a face recognition time having a predetermined time length; an air-blowing start step of controlling, if the face of the person is recognized in the face recognition step, the wind direction regulating device to blow the conditioned air toward the person whose face is recognized or toward a close-in location where the person was when the face was recognized; and an air-blowing stop step of stopping the refrigeration cycle in any of cases where the person whose face is recognized has moved out of the close-in location before a continuous determining time elapses, that is, within a predetermined time length from the start of the air-blowing start step, where a stop determining time having a predetermined time length has elapsed after start of the air-blowing start step, and where the person whose face is recognized has moved out of the close-in location before the stop determining time elapses.

### [Advantageous Effects of Invention]

An indoor unit of an air-conditioning apparatus according to the present invention is configured to, when a person who wants to temporarily and quickly cool the person down (or warm the person up) immediately after taking a bath or immediately after entering the room from the hot (or cold) outside (hereinafter referred to as an "after-bath person") is recognized, blow air that has been conditioned (hereinafter referred to as "conditioned air") toward the after-bath person so as to allow the after-bath person to easily and quickly cool the person down (warm the person up), and thereby provide increased comfort of the after-bath person. Also, it is possible to reduce the after-bath person bothering for searching the remote controller and operating the remote controller upon starting blowing of air (activating the refrigeration cycle) and stopping blowing of air (stopping the refrigeration cycle), which leads to improve convenience.

### [Brief Description of Drawings]

Fig. 1 is a front view of an indoor unit of an air-conditioning apparatus according to Embodiment 1 of the present invention.
Fig. 2 is a side cross-sectional view illustrating the indoor unit of Fig. 1.
Fig. 3 is a perspective view of a part (the area around an air outlet) of the indoor unit of Fig. 1.
Fig. 4 shows side views illustrating the state of the indoor unit of Fig. 1 installed in a room.
Fig. 5 is a flowchart illustrating steps of wind direction control of the indoor unit of Fig. 1.
Fig. 6 is a front view of a main body of an indoor unit of an air-conditioning apparatus according to Embodiment 2 of the present invention.
Fig. 7 is a flowchart illustrating the flow of operations performed by the indoor unit of Fig. 6.
Fig. 8 is a front view of a main body of an indoor unit of an air-conditioning apparatus according to Embodiment 3 of the present invention.
Fig. 9 is a flowchart illustrating the flow of operations performed by the indoor unit of Fig. 8.
Fig. 10 is a flowchart illustrating the flow of operations performed by the indoor unit of Fig. 8.

### [Description of Embodiments]

### [Embodiment 1]

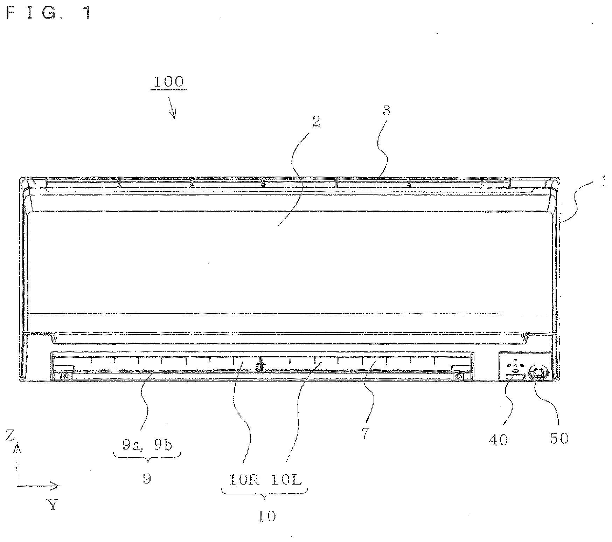

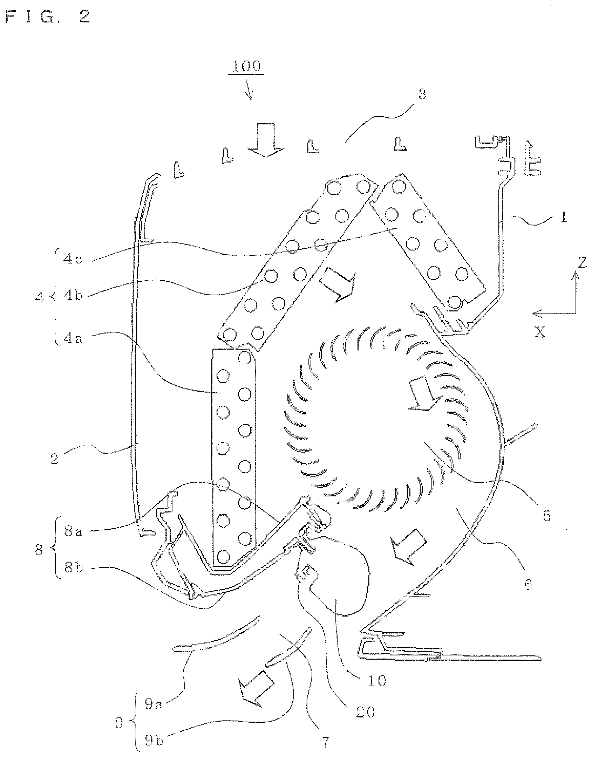

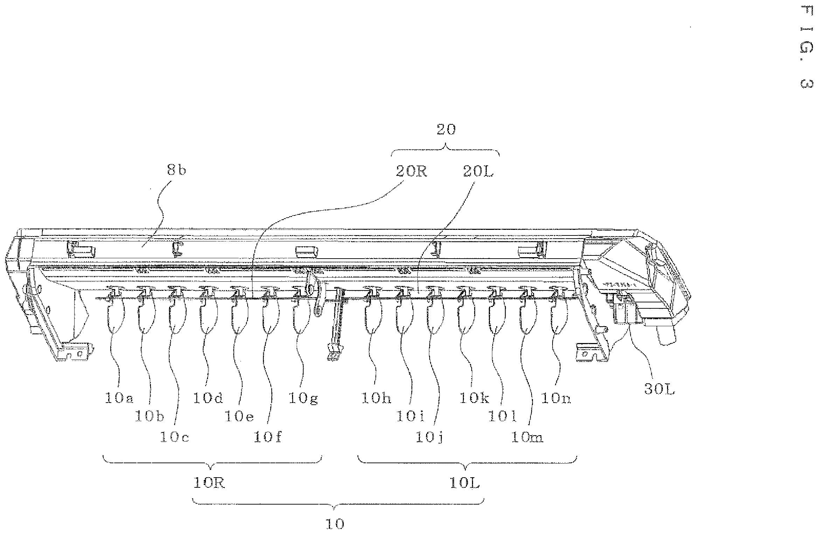

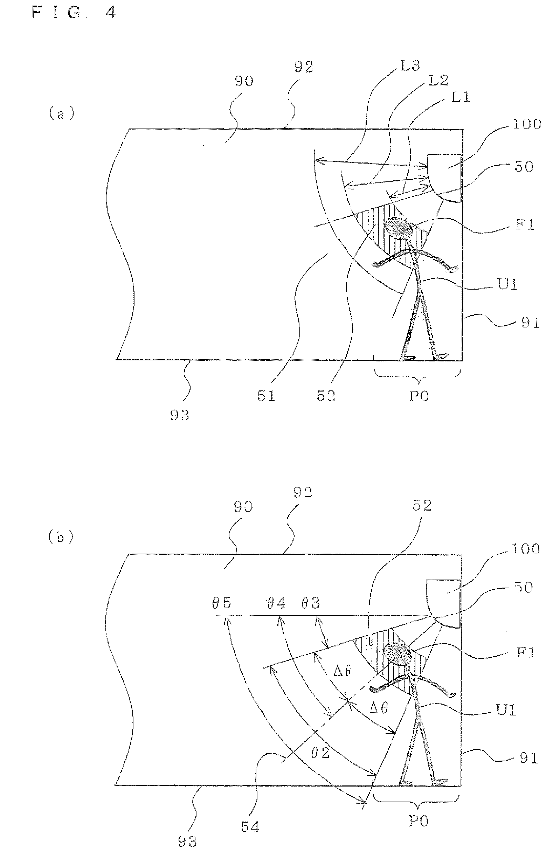

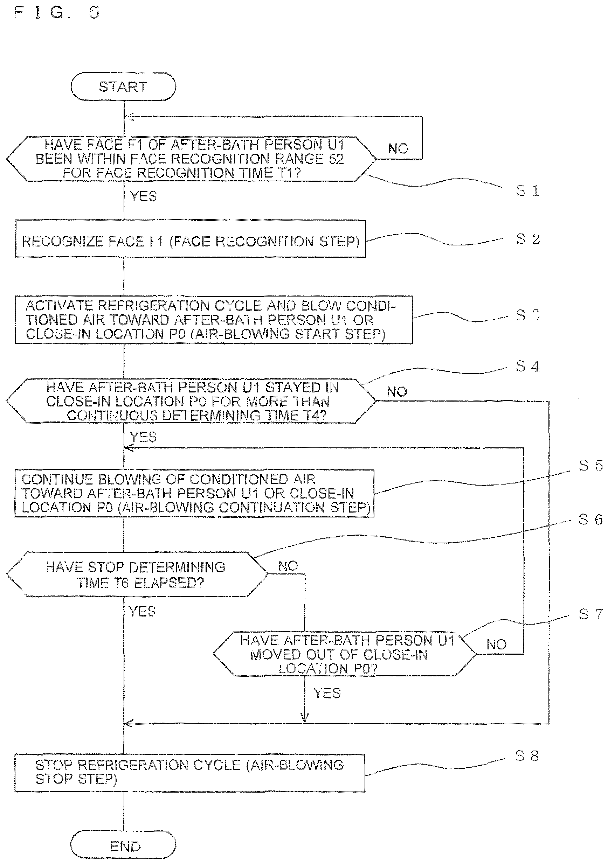

Figs. 1 to 5 are diagrams illustrating an indoor unit of an air-conditioning apparatus according to Embodiment 1 of the present invention. More specifically, Fig. 1 is a front view thereof; Fig. 2 is a side cross-sectional view thereof; Fig. 3 is a perspective view of a part (the area around an air outlet) thereof; Fig. 4 shows side views illustrating an installation state in a room; and Fig. 5 is a flowchart illustrating steps of wind direction control. It should be noted that the drawings are schematic, and the present invention is not limited to the embodiment shown in the drawings.

Referring to Figs. 1 to 3, an indoor unit 100 of an air-conditioning apparatus (hereinafter, simply referred to as an "indoor unit") includes a main body 1 having an air inlet 3 at the upper part thereof and an air outlet 7 at the lower part thereof, a front panel 2 openably covering the front surface of the main body 1, a fan 5 configured to form an air passage 6 that suctions air from the air inlet 3 and extends to the air outlet 7, and a heat exchanger 4 disposed on the upstream side of the fan 5 (i.e., disposed close to the air inlet 3).

Further, a receiving device 40 configured to receive a signal from a remote controller (not shown) and an imaging device 50 configured to image the inside of the room are disposed next to the air outlet 7 on the front surface of the main body 1.

It should be noted that types and installation positions of the receiving device 40 and the imaging device 50 of the present invention are not limited. For example, the receiving device 40 and the imaging device 50 may be disposed at the center of the front panel 2. Further, an informing device (not shown) for audibly or visually informing a user of the operational status of the indoor unit 100 is provided in the main body 1 or a remote controller (not shown).

The heat exchanger 4 includes a heat exchange front part 4a disposed substantially parallel to the front panel 2, a heat exchange upper front part 4b obliquely disposed at the upper front side of the fan 5, and a heat exchange upper rear part 4c obliquely disposed at the upper rear side of the fan 5. Further, a drain pan 8 is disposed under the heat exchange front part 4a. An upper surface 8a of the drain pan 8 forms a drain pan surface for receiving drain water, while a lower surface 8b of the drain pan 8 forms the front side of the air passage 6.

### (Wind Direction Regulating Device)

As a wind direction regulating device, a left-side horizontal air deflector group 10L and a right-side horizontal air deflector group 10R (collectively or individually referred to as a "horizontal air deflector 10") configured to regulate the horizontal (lateral) blowing direction of indoor air that has been conditioned by the heat exchanger 4 (hereinafter referred to as "conditioned air") are disposed near the air outlet 7 of the air passage, and a vertical air deflector 9 (a front vertical air deflector 9a and a rear vertical air deflector 9b are collectively referred to as a "vertical air deflector 9") configured to regulate the vertical (up and down) blowing direction of conditioned air is disposed in the air outlet 7 at the end of the air passage 6.

It should be noted that the terms "left-side" and "right-side" as used herein indicate the left-hand side and the right-hand side, respectively, when viewed from the indoor unit 100 toward the room, that is, when viewed from the rear side of the main body 1 toward the front panel 2.

### (Horizontal Air Deflector)

The right-side horizontal air deflector group 10R includes horizontal air deflectors 10a, 10b, ... , and 10g, each connected to a right-side connecting rod 20R, and is rotatably disposed on the lower surface 8b of the drain pan 8. Further, the left-side horizontal air deflector group 10L includes horizontal air deflectors 10h, 10i, ... , and 10n, each connected to a left-side connecting rod 20L.

The right-side horizontal air deflector group 10R and the right-side connecting rod 20R form a linkage mechanism, and the left-side horizontal air deflector group 10L and the left-side connecting rod 20L also form a linkage mechanism. The right-side connecting rod 20R is connected to right-side driving means (not shown), and the left-side connecting rod 20L is connected to left-side driving means 30L.

Thus, when the right-side connecting rod 20R is shifted by the right-side driving means, the horizontal air deflectors 10a, 10b, ... , and 10g rotate while being maintained parallel to each other; and when the left-side connecting rod 20L is shifted by the left-side driving means 30L, the horizontal air deflectors 10h, 10i, ... , and 10n rotate while being maintained parallel to each other. Accordingly, it is possible to blow conditioned air in the same direction from the full width of the air outlet 7, blow conditioned air in directions away from each other from the respective half widths of the air outlet 7, or blow conditioned air in directions toward each other from the respective half widths of the air outlet 7.

It should be noted that the form of the horizontal air deflectors 10 of the present invention is not limited to that shown in the drawings, and the number of horizontal air deflectors 10 may be changed. Further, the horizontal air deflector 10 may be divided into three groups or more and rotatably connected to respective connecting rods that are configured to be independently shifted.

### (Vertical Air Deflector)

The vertical air deflector 9 has a rotational axis parallel to the horizontal direction (Y direction) and is rotatably disposed in the main body 1. A rotary shaft of the front vertical air deflector 9a and a rotary shaft of the rear vertical air deflector 9b are connected to each other with a linkage mechanism or a gear mechanism so as to be rotated by a common drive motor.

It should be noted that the form of the vertical air deflector 9 of the present invention is not limited to that shown in the drawings. The front vertical air deflector 9a and the rear vertical air deflector 9b may be rotated by separate drive motors. Further, each of the front and rear vertical air deflectors 9a and 9b may be divided at the center so as to have four vertical air deflectors in total, and the respective vertical air deflectors may be rotated independently.

### (Recognition of Face of After-bath person)

Fig. 4(a) illustrates the procedure of recognition of the face of an after-bath person U1.

In Fig. 4(a), the indoor unit 100 is disposed on a wall (hereinafter referred to as a "rear wall") 91 of a room 90 in a position close to a ceiling 92.

Further, the imaging device (e.g., a CCD camera with 300,000 pixels) 50 has a view range 51 directed obliquely downward. If a face F1 of the after-bath person U1 is located in an area (indicated by hatching in Fig. 4(a) and referred to as a "face recognition range") 52 of the view range 51 within a distance L1 through a distance L2 (L1<L2) from the imaging device 50, a controller (not shown) recognizes the face F1.

Further, if the after-bath person U1 is within a distance L3 (L3>L2) from the imaging device 50, the controller determines that the after-bath person U1 wants the indoor unit 100 to notice that the after-bath person U1 is near the indoor unit 100. If the after-bath person U1 is within the distance L3 but the face F1 is not within the face recognition range 52, the controller causes informing means (not shown) to inform the after-bath person U1 that the face F1 is not within the face recognition range 52.

For example, the informing means may provide a voice message such as "Your face cannot be recognized" or "Please come closer", or may turn on or blink a lamp for indicating that the face cannot be recognized. It should be noted that the informing means may display text or images in place of providing a voice message or turning on or blinking a lamp.

On the other hand, if the after-bath person U1 is within the distance L3 (L3>L2) from the imaging device 50 but the face F1 remains not recognized (the face F1 is not within the face recognition range 52) for a predetermined time (e.g., 5 seconds), the controller determines that a person near the indoor unit 100 is not the after-bath person U1.

The controller may cause the informing means to inform the after-bath person U1 of this determination. For example, the informing means may provide a voice message such as "Operation will not be started" or may turn on a lamp so as to indicate a "standby mode".

Fig. 4(b) illustrates an example of the installed state of the imaging device 50.

In Fig. 4(b), the indoor unit 100 is disposed on the rear wall 91. The imaging device 50 is a CCD camera, and is located about 0.30 meters away from the rear wall 91 in the horizontal direction and about 2 meters above a floor 93. Further, a fish-eye lens (not shown) is attached to the CCD camera. The fish-eye lens is disposed such that a light distribution center axis 54 thereof has a depression angle θ4 of about 35°, and has an angular spread Δθ of 20° at each of the upper and lower sides with respect to the light distribution center axis 54. In other words, the CCD camera has a detection range θ2 (including the face recognition range 52) between an upper detection angle θ3 (15°=35°-20°) and a lower detection angle θ5 (55°=35°+20°).

### (Controller)

The indoor unit 100 is provided with the controller (not shown). The controller is configured to control the temperature, the blowing amount of conditioned air, and the like (hereinafter referred to as "wind direction control") in accordance with the indoor conditions and requests from users (residents).

The indoor unit 100 is configured to blow conditioned air intensively toward an after-bath person U1 (a generic term for a person who wants to temporarily and quickly cool the person down (or warm the person up) immediately after taking a bath or immediately after entering the room from the hot (or cold) outside). Accordingly, the indoor unit 100 first needs to know that the after-bath person U1 is near the indoor unit 100 (immediately after the person took a bath or entered the room, for example). Then, if the after-bath person U1 is near the indoor unit 100, the refrigeration cycle is activated, and sends air toward the after-bath person U1.

Referring to Fig. 5, the controller executes the following steps.

First, it is determined whether the face F1 of the after-bath person U1 has been within the face recognition range 52 for a face recognition time T1 (e.g., 5 seconds) (S1).

Then, if the face F1 of the after-bath person U1 has been within the face recognition range 52 for the face recognition time T1, the face F1 is recognized (face recognition step, S2).

On the other hand, in the case of not recognizing the face F1, the controller stands by until the face F1 is recognized.

Then, if the face F1 is recognized, the refrigeration cycle (including the fan 5) is activated so as to blow conditioned air toward the after-bath person U1 or a close-in location P0 (air-blowing start step, S3).

It should be noted that the "close-in location P0" indicates a position where the after-bath person U1 can put the face F1 within the face recognition range 52, and a relatively small area including this position (see Fig. 4).

Then, it is determined whether the after-bath person U1 has stayed in the close-in location P0 for more than a continuous determining time T4 (e.g., 30 seconds) (S4). That is, the after-bath person U1 indicates the person's wish to temporarily and quickly cool the person down or warm the person up by taking this action.

Then, if the after-bath person U1 wants to temporarily and quickly cool the person down, the blowing of conditioned air toward the after-bath person U1 or the close-in location P0 is continued (air-blowing continuation step, S5).

On the other hand, if the after-bath person U1 does not want to temporarily and quickly cool the person down (does not want it any more) although the refrigeration cycle has been activated, the after-bath person U1 simply moves out of the close-in location P0, and the refrigeration cycle will stop (air-blowing stop step, S8).

The air-blowing continuation step (S5) generally continues until a stop determining time T6 elapses (e.g., 10 minutes) after activation of the refrigeration cycle (S6). That is, even if the after-bath person U1 stays in the close-in location P0 for more than the stop determining time T6, blowing of air (refrigeration cycle) is stopped when the stop determining time T6 elapses. This prevents the after-bath person U1 from being excessively cooled down (warmed up).

On the other hand, if the after-bath person U1 has moved out of the close-in location P0 before the stop determining time T6 elapses (S7), the refrigeration cycle is stopped (S8). That is, when the after-bath person U1 wants to finish cooling the person down (warming the person up), the after-bath person U1 simply moves out of the close-in location P0 without operating the remote controller or the like, and the refrigeration cycle (blowing of air) will stop.

Accordingly, the after-bath person U1 can temporarily and quickly cool the person down (warm the person up) immediately after taking a bath or immediately after entering the room from the hot (or cold) outside. Further, there is no need to operate the remote controller, and therefore it is possible to save the person the trouble of looking for the remote controller, which improves convenience.

Also, when the after-bath person U1 has cooled the person down (warmed the person up), the after-bath person U1 simply moves out of the close-in location P0, and the refrigeration cycle will stop. Thus, there is no need to operate the remote controller, and it is therefore possible to save the person the annoying for searching the remote controller, which improves convenience.

Moreover, when the stop determining time T6 elapses, the refrigeration cycle stops. This prevents the after-bath person U1 from being excessively cooled down (warmed up).

In the above, the air-blowing start step S3 is always executed after the face recognition step S2. However, the present invention is not limited thereto, and one of a "mode of always executing the air-blowing start step S3 after the face recognition step S2" and a "mode of not executing the air-blowing start step S3" may be selected and set in advance.

That is, if the mode of executing the air-blowing start step S3 is selected, each of the above steps (S1 to S8) is executed. On the other hand, if the mode of executing the air-blowing start step S3 is not selected, the face recognition step S2 may be considered as a start switch of a regular cooling (heating) operation, and thus a regular cooling (heating) operation may be performed.

### [Embodiment 2]

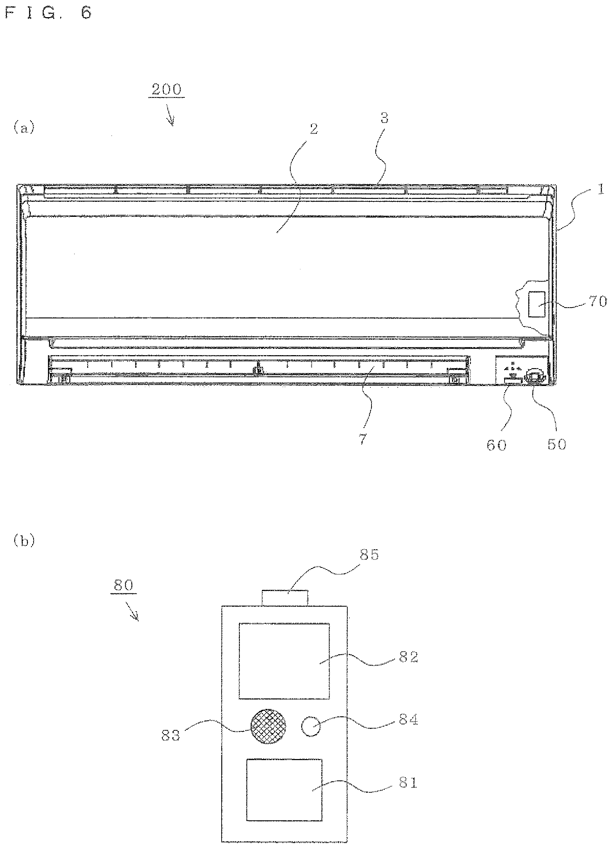

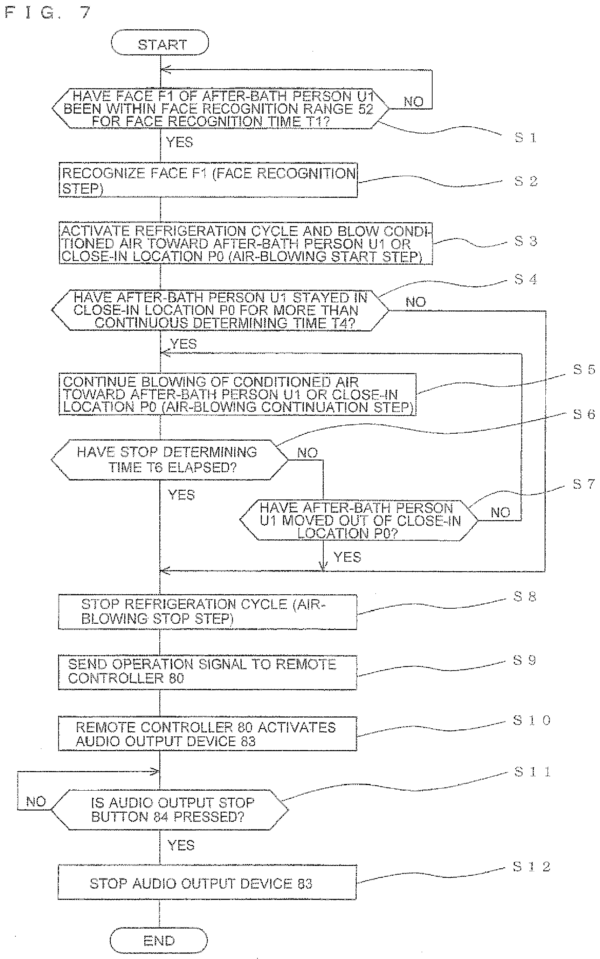

Figs. 6 and 7 illustrate an indoor unit of an air-conditioning apparatus according to Embodiment 2 of the present invention. More specifically, Fig. 6(a) is a front view of a main body thereof; Fig. 6(b) is a front view of a wireless remote controller; and Fig. 7 is a flowchart illustrating the flow of operations. It should be noted that the same components as those in Embodiment 1 are denoted by the same reference signs, and a description thereof will be partially omitted. It should be also noted that the drawings are schematic, and the present invention is not limited to the embodiment shown in the drawings.

### (Main Body)

Referring to Fig. 6(a), in a main body 1 of an indoor unit 200 of an air-conditioning apparatus (hereinafter, simply referred to as an "indoor unit"), a main body communication device 60 configured to exchange signals with (transmits signals to and receives signals from) a wireless remote controller 80, and an imaging device 50 configured to image the inside of the room are disposed next to an air outlet 7 on the front surface of the main body 1, and a controller 70 (schematically shown in a partial cutaway view of a front panel 2) configured to instruct transmission of an operation signal to the wireless remote controller 80 on the basis of information regarding a person imaged by the imaging device 50 are also provided (it should be noted that transmission of an operation signal is actually performed by the main body communication device 60).

It should be noted the types and installation positions of the main body communication device 60 and the imaging device 50 of the present invention are not limited. For example, the main body communication device 60 and the imaging device 50 may be disposed at the center of the front panel 2.

### (Wireless Remote Controller)

Referring to Fig. 6(b), the wireless remote controller 80 is configured to transmit a manipulation signal to the main body 1 (the main body communication device 60) and receive operating information and an operation signal from the main body 1. The wireless remote controller 80 includes an input unit 81 configured to allow the after-bath person U1 to input a manipulation signal, a display unit 82 configured to display the input manipulation signal and the operating information received from the main body 1, an audio output device 83 configured to output sound, an audio output stop button 84 configured to stop audio output from the audio output device 83, and a wireless remote controller communication device 85 configured to enable communication with the main body 1.

### (Controller)

Referring to Fig. 6, the controller 70 of the indoor unit 200 is configured to control the temperature, the blowing amount of conditioned air, and the like (hereinafter referred to as "wind direction control") in accordance with the indoor conditions and requests from users (residents), and to control the main body communication device 60 to transmit an operation signal for operating the audio output device 83 provided in the wireless remote controller 80.

That is, when the after-bath person U1 moves to a certain position (e.g., sofa) after being cooled down (or while being cooled down), the wireless remote controller 80 itself outputs sound so as to let the after-bath person U1 know where the wireless remote controller 80 is.

The air-blowing start step (S3), and the air-blowing continuation step (S5) through the air-blowing stop step (S8) that are performed after the face F1 of the after-bath person U1 is recognized are the same as those of Embodiment 1.

Then, substantially simultaneously with execution of the air-blowing stop step (S8), the controller 70 controls the main body communication device 60 such that the main body communication device 60 sends an operation signal to the wireless remote controller 80 (S9, referred to as a "remote controller operation instruction step").

Thus, when the wireless remote controller communication device 85 receives the operation signal, the wireless remote controller 80 activates the audio output device 83 such that the wireless remote controller 80 outputs sound (beep, bell sound, or the like) or a voice message (e.g., "Wireless remote controller is here") (S10).

Then, such a sound or a voice message continues to play until the after-bath person U1 finds the wireless remote controller 80 and presses the audio output stop button 84 (S11). When the audio output stop button 84 is pressed, the audio output device 83 is stopped (S12).

Accordingly, even if the after-bath person U1 does not know where the wireless remote controller 80 is put (or placed), when the after-bath person U1 moves away from the main body 1 after being cooled down (or while being cooled down), the after-bath person U1 can know where the wireless remote controller 80 is put (or placed) through the sound or voice message output by the wireless remote controller 80.

That is, since there is no need to perform any special operation, it is possible to easily and quickly find the wireless remote controller 80, which improves convenience.

Further, a send button for sending an operation signal that causes the wireless remote controller 80 to output sound does not need to be provided in the main body 1. This not only prevents the design properties of the exterior appearance of the main body 1 from being impaired, but also greatly improves convenience for an after-bath person U1 who cannot reach the main body 1.

In the above, substantially simultaneously with execution of the air-blowing stop step (S8), the remote controller operation instruction step (S9) is executed. However, the present invention is not limited thereto, and the remote controller operation instruction step (S9) may be executed substantially simultaneously with the air-blowing start step (S3). In this case, the after-bath person U1 is cooled down while hearing the sound output from the wireless remote controller 80.

### [Embodiment 3]

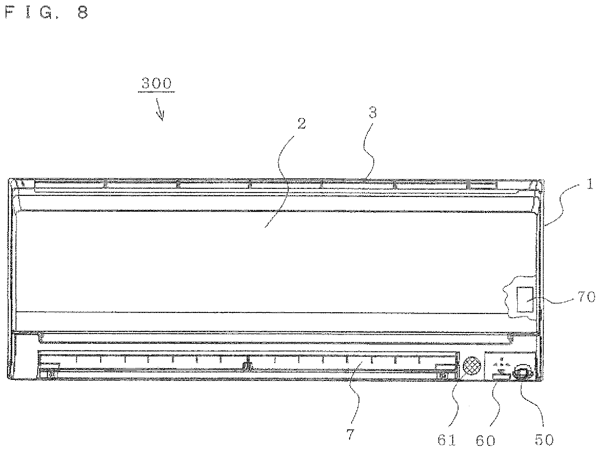

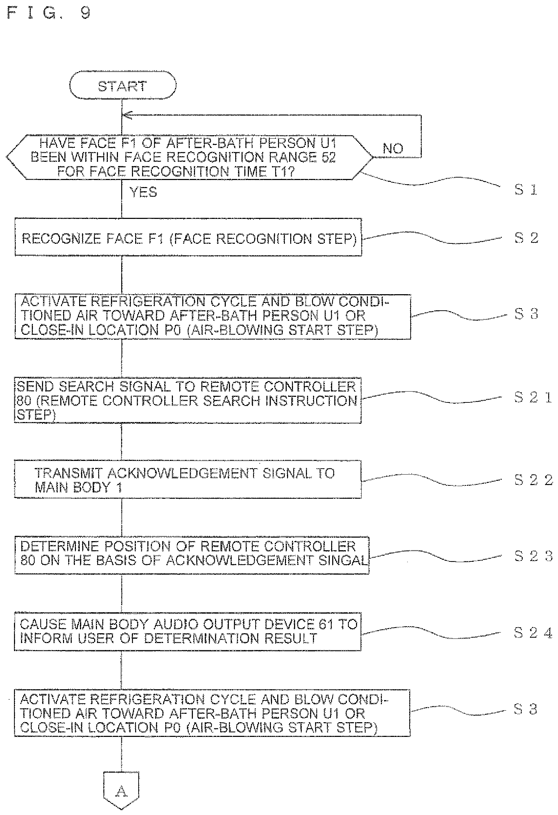

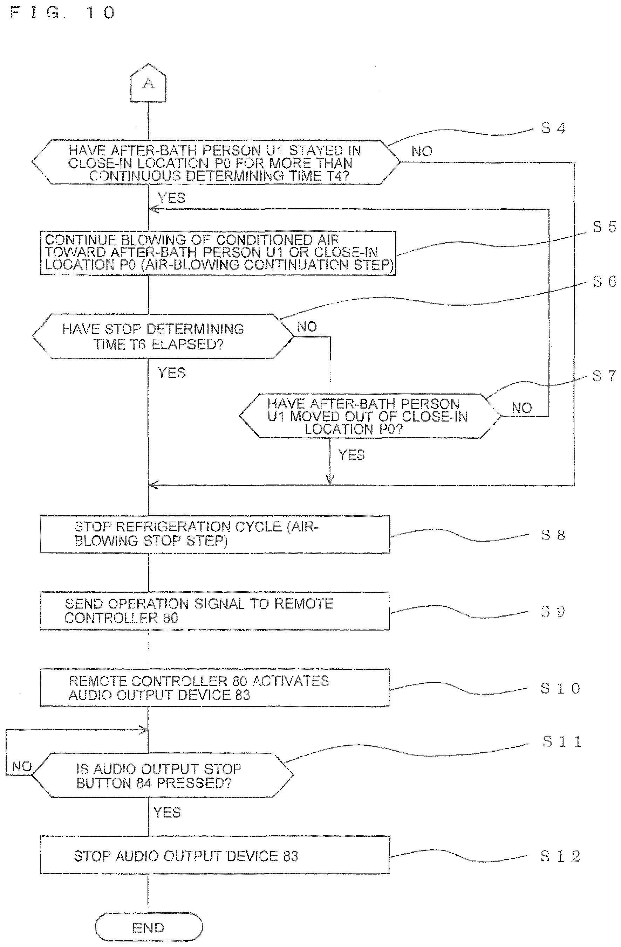

Figs. 8 to 10 illustrate an indoor unit of an air-conditioning apparatus according to Embodiment 3 of the present invention. More specifically, Fig. 8 is a front view of a main body thereof, and Figs. 9 and 10 are flowcharts illustrating the flow of operations. It should be noted that the same components as those in Embodiment 2 are denoted by the same reference signs, and a description thereof will be partially omitted.

Referring to Fig. 8, a main body 1 of an indoor unit 300 of an air-conditioning apparatus (hereinafter, simply referred to as an "indoor unit") is provided with a main body audio output device 61 that outputs sound.

### (Controller)

Referring to Figs. 9 and 10, substantially simultaneously with execution of the air-blowing start step (S3), a controller 70 of the indoor unit 300 controls a main body communication device 60 to send a search signal to a wireless remote controller 80 (S21, referred to as a "remote controller search instruction step").

When the wireless remote controller communication device 85 receives the search signal, the wireless remote controller 80 transmits an acknowledgement signal to the main body communication device 60 (S22).

When the main body communication device 60 receives the acknowledgement signal, the controller 70 determines the position of the wireless remote controller 80 on the basis of the acknowledgement signal (S23), and causes a main body audio output device 61 to inform a user of the determination result (S24). For example, the main body audio output device 61 may output a voice message such as "The wireless remote controller is on the right at the back of the room".

The air-blowing continuation step (S5), the air-blowing stop step (S8), and the steps that follow are the same as those of Embodiment 2.

According to the indoor unit 300, even if the after-bath person U1 does not know where the wireless remote controller 80 is put (or placed), the after-bath person U1 is informed of the place where the wireless remote controller 80 is put (or placed) by the sound output from the main body 1. This makes it possible to more easily and quickly find the wireless remote controller 80, which improves convenience.

In the above, the main body audio output device 61 is provided in the main body 1. However, the present invention is not limited thereto, and text (e.g., "The wireless remote controller is on the left near the main body") or graphics (left pointing arrow or the like) may be projected onto a front panel 2 from the inside of the main body 1.

Also, the device for determining the position of the wireless remote controller 80 on the basis of an acknowledgement signal is not particularly limited, and the main body communication devices 60 (or only receiving antenna units thereof) may be provided at a plurality of positions in the main body communication devices 60 such that the direction of the wireless remote controller 80 may be determined on the basis of the intensities of (the intensity difference between) signals received by the respective main body communication devices 60 (or the receiving antenna units).

### [Reference Signs List]

1 main body; 2 front panel; 3 air inlet; 4 heat exchanger; 4a heat exchange front part; 4b heat exchange upper front part; 4c heat exchange upper rear part; 5 fan; 6 air passage; 7 air outlet; 8 drain pan; 8a upper surface; 8b lower surface; 9 vertical air deflector; 9a front vertical air deflector; 9b rear vertical air deflector; 10 horizontal air deflector; 10L left-side horizontal air deflector group; 10R right-side horizontal air deflector group; 10a-10h horizontal air deflector; 20L left-side connecting rod; 20R right-side connecting rod; 30L left-side driving means; 40 receiving device; 50 imaging device; 51 view range; 52 face recognition range; 54 light distribution center axis; 60 main body communication device; 61 main body audio output device; 70 controller; 80 wireless remote controller; 81 input unit; 82 display unit; 83 audio output device; 84 audio output stop button; 85 wireless remote controller communication device; 90 room; 91 rear wall; 92 ceiling; 93 floor; 100 indoor unit (Embodiment 1); 200 indoor unit (Embodiment 2); 300 indoor unit (Embodiment 3); F1 face; L1 distance; L2 distance; L3 distance; P0 close-in location; U1 after-bath person; θ2 detection range; θ3 upper detection angle; θ4 depression angle; θ5 lower detection angle; S2 face recognition step; S3 air-blowing start step; S5 air-blowing continuation step; S8 air-blowing stop step; T1 face recognition time; T4 continuous determining time; and T6 stop determining time.

## Claims

1. An indoor unit (100, 200, 300) of an air-conditioning apparatus comprising:
a main body (1) having an air inlet (3) and an air outlet (7) and disposed on a wall of a room (90); a fan (5) configured to form an air passage (6) that suctions air from the air inlet (3) and extends to the air outlet (7); a heat exchanger (4) disposed in the air passage (6) and configured to execute a part of a refrigeration cycle; a wind direction regulating device disposed in the air outlet (7) and configured to regulate a blowing direction of air conditioned by the heat exchanger (4); an imaging device (50) configured to image an inside of the room (90); and a controller (70) configured to control the wind direction regulating device on the basis of information regarding a user imaged by the imaging device (50);
**characterized in that** the controller (70) is configured to execute:
a face recognition step (S2) of recognizing a face of the user if the face of the user has been within a face recognition range (52) in a view range (51) of the imaging device (50) for a face recognition time (T1) having a predetermined time length, the face recognition range (52) being bounded by two distances L1 and L2 from the imaging device (50), where L1<L2;
an air-blowing start step (S3) of starting the refrigeration cycle and controlling, if the face of the user is recognized in the face recognition step (S2), the wind direction regulating device to blow the conditioned air toward the user whose face is recognized or toward a close-in location (P0) where the user was when the face was recognized, the refrigeration cycle being not started otherwise; and
an air-blowing stop step (S8) of stopping the refrigeration cycle in any of cases where the user whose face has been recognized moves out of the close-in location (P0) before a continuous determining time (T4) having a predetermined time length from start of the air-blowing start step (S3) elapses, where a stop determining time (T6) having a predetermined time length elapses after start of the air-blowing start step (S3), and where the user whose face has been recognized moves out of the close-in location (P0) before the stop determining time (T6) elapses.

2. The indoor unit (100) of an air-conditioning apparatus of Claim 1, further comprising an informing device, wherein, in a case where the controller (70) determines that the user is near the main body (1) but the controller (70) is unable to recognize a face of the user, the controller (70) causes the informing device to inform the user that the controller (70) is unable to recognize the face of the user.

3. The indoor unit (100) of an air-conditioning apparatus of Claim 1 or 2, wherein the imaging device (50) is a CCD camera having 1,000,000 pixels or less.

4. The indoor unit (100) of an air-conditioning apparatus of Claim 3, wherein a fish-eye lens is attached to the CCD camera, and the fish-eye lens is disposed on the main body (1) such that a light distribution center axis (54) thereof has a depression angle (θ4) of substantially 35°, and has a detection range of 20° at each of upper and lower sides with respect to the light distribution center axis (54).

5. The indoor unit (100) of an air-conditioning apparatus of any one of Claims 1 to 4, wherein the wind direction regulating device includes at least a pair of vertical air deflectors (9) configured to regulate a vertical blowing direction of the conditioned air, and at least a pair of horizontal air deflectors (10) configured to regulate a horizontal blowing direction of the conditioned air.

6. The indoor unit (200) of an air-conditioning apparatus of any one of Claims 1 to 5, further comprising:
a wireless remote controller (80) provided with a wireless remote controller communication device (85) configured to receive an operation signal from the main body (1), and a wireless remote controller (80) informing device configured to emit at least any of sound, light, and vibration,
wherein the main body (1) is provided with a main body communication device (60) configured to exchange the operation signal with the wireless remote controller (80);
wherein the controller (70) causes the main body communication device (60) to send an operation signal to the wireless remote controller communication device (85), at the substantially same time as execution of the air-blowing stop step (S8); and
wherein the wireless remote controller (80) informing device emits at least any of sound, light, and vibration when the wireless remote controller communication device (85) receives the operation signal.

7. The indoor unit (300) of an air-conditioning apparatus of Claim 6,
wherein the main body (1) is provided with a main body audio output device (61) or a main body display device;
wherein the controller (70) causes the main body communication device (60) to send a search signal to the wireless remote controller communication device (85), at the substantially same time as execution of the air-blowing start step (S3); and
wherein the wireless remote controller (80) informing device sends an acknowledgement signal to the main body communication device (60) when the wireless remote controller communication device (85) receives the search signal;
wherein the controller (70) determines a position of the wireless remote controller (80) on the basis of the acknowledgement signal when the main body communication device (60) receives the acknowledgement signal; and
wherein the main body audio output device (61) or the main body display device audibly or visually informs a user of the position of the wireless remote controller (80) determined by the controller (70).

## Patentansprüche

1. Innenraumeinheit (100,200,300) einer Klimaanlagenvorrichtung, aufweisend:
einen Hauptkörper (1), der einen Lufteinlass (3) und einen Luftauslass (7) aufweist und an einer Wand eines Raums (90) angeordnet ist; ein Gebläse (5), das konfiguriert ist, um einen Luftdurchlass (6) auszubilden, der Luft aus dem Lufteinlass (3) saugt und sich in den Luftauslass (7) erstreckt; einen Wärmetauscher (4), der in dem Luftdurchlass (6) angeordnet und konfiguriert ist, um einen Teil eines Kältezyklus auszuführen; eine Windrichtung-Regulierungsvorrichtung, die in dem Luftauslass (7) angeordnet und konfiguriert ist, um eine Blasrichtung von Luft, die durch den Wärmetauscher (4) klimatisiert ist, zu regulieren; eine Abbildungsvorrichtung (50), die konfiguriert ist, um das Innere des Raums (90) abzubilden; und eine Steuerung (70), die konfiguriert ist, um die Windrichtung-Regulierungsvorrichtung auf Basis von Informationen hinsichtlich eines Nutzers zu steuern, die durch die Abbildungsvorrichtung (50) abgebildet sind;
**dadurch gekennzeichnet, dass** die Steuerung (70) konfiguriert ist, um auszuführen:
einen Gesichtserkennungsschritt (S2) zum Erkennen eines Gesichts des Nutzers, falls sich das Gesicht des Nutzers innerhalb eines Gesichtserkennungsbereichs (52) in einem Sichtbereich (51) der Abbildungsvorrichtung (50) für eine Gesichtserkennungszeit (T1) mit einer vorbestimmten Zeitlänge befunden hat, wobei der Gesichtserkennungsbereich (52) durch zwei Entfernungen L1 und L2 von der Abbildungsvorrichtung (50) begrenzt ist, wobei L1 < L2;
einen Luftblasstartschritt (S3) zum Starten des Kältezyklus und zum Steuern, falls das Gesicht des Nutzers in dem Gesichtserkennungsschritt (S2) erkannt wird, der Windrichtung-Regulierungsvorrichtung, um die klimatisierte Luft in Richtung des Nutzers zu blasen, dessen Gesicht erkannt wird, oder in Richtung einer nahegelegenen Stelle (P0), an welcher sich der Nutzer befunden hat, als das Gesicht erkannt wurde, wobei der Kältezyklus andernfalls nicht gestartet wird; und
einen Luftblasstoppschritt (S8) zum Stoppen des Kältezyklus in jedem Fall, in welchem sich der Nutzer, dessen Gesicht erkannt worden ist, von der nahegelegenen Stelle (P0) wegbewegt, bevor eine kontinuierliche Bestimmungszeit (T4) mit einer vorbestimmten Zeitlänge von einem Start des Luftblasstartschritts (S3) abläuft, wobei eine Stoppbestimmungszeit (T6) mit einer vorbestimmten Zeitlänge nach dem Start des Luftblasstartschritts (S3) abläuft, und wobei sich der Nutzer, dessen Gesicht erkannt worden ist, von der nahegelegenen Stelle (P0) wegbewegt, bevor die Stoppbestimmungszeit (T6) abläuft.

2. Innenraumeinheit (100) einer Klimaanlagenvorrichtung nach Anspruch 1, ferner mit einer Informationsvorrichtung, wobei, für den Fall, dass die Steuerung (70) bestimmt, dass sich der Nutzer in der Nähe des Hauptkörpers (1) befindet, aber die Steuerung (70) ein Gesicht des Nutzers nicht erkennen kann, die Steuerung (70) bewirkt, dass die Informationsvorrichtung den Nutzer darüber informiert, dass die Steuerung (70) das Gesicht des Nutzers nicht erkennen kann.

3. Innenraumeinheit (100) einer Klimaanlagenvorrichtung nach Anspruch 1 oder 2, wobei die Abbildungsvorrichtung (50) eine CCD-Kamera mit 1.000.000 Bildpunkten oder weniger ist.

4. Innenraumeinheit (100) einer Klimaanlagenvorrichtung nach Anspruch 3, wobei eine Fischaugenlinse an der CCD-Kamera angebracht ist, und die Fischaugenlinse an dem Hauptkörper (1) derart angeordnet ist, dass eine Lichtverteilungsmittelachse (54) derselben einen Depressionswinkel (θ4) von im Wesentlichen 35° aufweist, und einen Erfassungsbereich von 20° sowohl an einer oberen als auch einer unteren Seite mit Bezug auf die Lichtverteilungsmittelachse (54) aufweist.

5. Innenraumeinheit (100) einer Klimaanlagenvorrichtung nach einem der Ansprüche 1-4, wobei die Windrichtung-Regulierungsvorrichtung zumindest ein Paar von vertikalen Luftdeflektoren (9), die konfiguriert sind, um eine vertikale Blasrichtung der klimatisierten Luft zu regulieren, und zumindest ein Paar von horizontalen Luftdeflektoren (10), die konfiguriert sind, um eine horizontale Blasrichtung der klimatisierten Luft zu regulieren, umfasst.

6. Innenraumeinheit (200) einer Klimaanlagenvorrichtung nach einem der Ansprüche 1-5, ferner aufweisend:
eine drahtlose Fernsteuerung (80), die mit einer drahtlosen Fernsteuerungskommunikationsvorrichtung (85), die konfiguriert ist, um ein Betriebssignal von dem Hauptkörper (1) zu empfangen, und einer drahtlosen Fernsteuerungs- (80) Informationsvorrichtung, die konfiguriert ist, um zumindest eines von Schall, Licht und Schwingung zu emittieren, versehen ist,
wobei der Hauptkörper (1) mit einer Hauptkörperkommunikationsvorrichtung (60) versehen ist, die konfiguriert ist, um das Betriebssignal mit der drahtlosen Fernsteuerung (80) auszutauschen;
wobei die Steuerung (70) bewirkt, dass die Hauptkörperkommunikationsvorrichtung (60) ein Betriebssignal an die drahtlose Fernsteuerungskommunikationsvorrichtung (85) zu dem im Wesentlichen selben Zeitpunkt wie bei einer Ausführung des Luftblasstoppschritts (S8) sendet; und
wobei die drahtlose Fernsteuerungs- (80) Informationsvorrichtung zumindest eines von Schall, Licht und Schwingung emittiert, wenn die drahtlose Fernsteuerungskommunikationsvorrichtung (85) das Betriebssignal empfängt.

7. Innenraumeinheit (300) einer Klimaanlagenvorrichtung nach Anspruch 6,
wobei der Hauptkörper (1) mit einer Hauptkörper-Audioausgabevorrichtung (61) oder einer Hauptkörper-Anzeigevorrichtung versehen ist;
wobei die Steuerung (70) bewirkt, dass die Hauptkörper-Kommunikationsvorrichtung (60) ein Suchsignal an die drahtlose Fernsteuerungskommunikationsvorrichtung (85) zu dem im Wesentlichen selben Zeitpunkt wie eine Ausführung des Luftblasstartschritts (S3) sendet; und
wobei die drahtlose Fernsteuerungs- (80) Informationsvorrichtung ein Bestätigungssignal an die Hauptkörper-Kommunikationsvorrichtung (60) sendet, wenn die drahtlose Fernsteuerungskommunikationsvorrichtung (85) das Suchsignal empfängt;
wobei die Steuerung (70) eine Position der drahtlosen Fernsteuerung (80) auf Basis des Bestätigungssignals bestimmt, wenn die Hauptkörper-Kommunikationsvorrichtung (60) das Bestätigungssignal empfängt; und
wobei die Hauptkörper-Audioausgabevorrichtung (61) oder die Hauptkörper-Anzeigevorrichtung einen Nutzer über die durch die Steuerung (70) bestimmte Position der drahtlosen Fernsteuerung (80) akustisch oder visuell informiert.

## Revendications

1. Unité intérieure (100, 200, 300) d'un appareil de climatisation comprenant :
un corps principal (1) présentant une entrée d'air (3) et une sortie d'air (7) et disposé sur une paroi d'une salle (90) ; un ventilateur (5) configuré pour former un passage d'air (6) qui aspire de l'air de l'entrée d'air (3) et s'étend à la sortie d'air (7) ; un échangeur de chaleur (4) disposé dans le passage d'air (6) et configuré pour exécuter une partie d'un cycle de réfrigération ; un dispositif de régulation de direction du vent disposé dans la sortie d'air (7) et configuré pour réguler une direction de soufflage d'air climatisé par l'échangeur de chaleur (4) ; un dispositif d'imagerie (50) configuré pour imager un intérieur de la salle (90) ; et un dispositif de commande (70) configuré pour commander le dispositif de régulation de direction du vent sur la base d'informations concernant un utilisateur imagé par le dispositif d'imagerie (50) ;
**caractérisée en ce que** le dispositif de commande (70) est configuré pour exécuter :
une étape de reconnaissance de visage (S2) consistant à reconnaître un visage de l'utilisateur si le visage de l'utilisateur s'est trouvé dans une plage de reconnaissance de visage (52) dans un champ visuel (51) du dispositif d'imagerie (50) pendant une durée de reconnaissance de visage (T1) présentant une durée prédéterminée, la plage de reconnaissance de visage (52) étant délimitée par deux distances L1 et L2 depuis le dispositif d'imagerie (50), où L1 < L2 ;
une étape de démarrage de soufflage d'air (S3) consistant à démarrer le cycle de réfrigération et à commander, si le visage de l'utilisateur est reconnu à l'étape de reconnaissance de visage (S2), le dispositif de régulation de direction du vent pour souffler l'air climatisé vers l'utilisateur dont le visage est reconnu ou vers un emplacement proche (P0) où l'utilisateur était lorsque le visage a été reconnu, le cycle de réfrigération n'étant pas démarré autrement ; et
une étape d'arrêt de soufflage d'air (S8) consistant à arrêter le cycle de réfrigération dans l'un quelconque des cas où l'utilisateur dont le visage a été reconnu sort de l'emplacement proche (P0) avant l'expiration d'une durée de détermination continue (T4) présentant une durée prédéterminée depuis le démarrage de l'étape de démarrage de soufflage d'air (S3), où une durée de détermination d'arrêt (T6) présentant une durée prédéterminée s'écoule après le démarrage de l'étape de démarrage de soufflage d'air (S3), et où l'utilisateur dont le visage a été reconnu sort de l'emplacement proche (P0) avant l'expiration de la durée de détermination d'arrêt (T6).

2. Unité intérieure (100) d'un appareil de climatisation selon la revendication 1, comprenant en outre un dispositif d'information dans laquelle dans un cas où le dispositif de commande (70) détermine que l'utilisateur est proche du corps principal (1) mais le dispositif de commande (70) est incapable de reconnaître un visage de l'utilisateur, le dispositif de commande (70) commande le dispositif d'information de façon à informer l'utilisateur que le dispositif de commande (70) est inapte à reconnaître le visage de l'utilisateur.

3. Unité intérieure (100) d'un appareil de climatisation selon la revendication 1 ou 2, dans lequel le dispositif d'imagerie (50) est une caméra CCD présentant 1 000 000 pixels ou moins.

4. Unité intérieure (100) d'un appareil de climatisation selon la revendication 3, dans laquelle une lentille fisheye est agencée sur la caméra CCD, et la lentille fisheye est disposée sur le corps principal (1) de sorte qu'un axe central de distribution de lumière (54) de celle-ci présente un angle de dépression (θ4) sensiblement égal à 35°, et présente une plage de détection de 20° de part et d'autre de l'axe central de distribution de lumière (54).

5. Unité intérieure (100) d'un appareil de climatisation selon l'une quelconque des revendications 1 à 4, dans laquelle le dispositif de régulation de direction du vent inclut au moins une paire de déflecteurs d'air vertical (9) configurés pour réguler une direction de soufflage vertical de l'air climatisé, et au moins une paire de déflecteurs d'air horizontal (10) configurés pour réguler une direction de soufflage horizontal de l'air climatisé.

6. Unité intérieure (200) d'un appareil de climatisation selon l'une quelconque des revendications 1 à 5, comprenant en outre :
un dispositif de commande distant sans fil (80) doté d'un dispositif de communication sans fil (85) configuré pour recevoir un signal d'opération du corps principal (1), et un dispositif d'information sans fil configuré pour émettre au moins l'un quelconque parmi son, lumière et vibration,
dans laquelle le corps principal (1) est doté d'un dispositif de communication de corps principal (60) configuré pour échanger le signal d'opération avec le dispositif de commande distant sans fil (80) ;
dans laquelle le dispositif de commande (70) amène le dispositif de communication de corps principal (60) à envoyer un signal d'opération au dispositif de communication sans fil (85), sensiblement en même temps que l'exécution de l'étape d'arrêt de soufflage d'air (S8) ; et
dans laquelle le dispositif d'information sans fil émet au moins l'un quelconque parmi son, lumière et vibration lorsque le dispositif de communication sans fil (85) reçoit le signal d'opération.

7. Unité intérieure (300) d'un appareil de climatisation selon la revendication 6,
dans laquelle le corps principal (1) est doté d'un dispositif de sortie audio de corps principal (61) ou d'un dispositif d'affichage de corps principal ;
dans laquelle le dispositif de commande (70) amène le dispositif de communication de corps principal (60) à envoyer un signal de recherche au dispositif de communication sans fil (85), sensiblement en même temps que l'exécution de l'étape de démarrage de soufflage d'air (S3) ; et
dans laquelle le dispositif d'information sans fil envoie un signal de confirmation au dispositif de communication de corps principal (60) lorsque le dispositif de communication sans fil (85) reçoit le signal de recherche ;
dans laquelle le dispositif de commande (70) détermine une position du dispositif de commande distant sans fil (80) sur la base du signal de confirmation lorsque le dispositif de communication de corps principal (60) reçoit le signal de confirmation ; et
dans lequel le dispositif de sortie audio de corps principal (61) ou le dispositif d'affichage de corps principal informe de façon sonore ou visuelle un utilisateur de la position du dispositif de commande distant sans fil (80) déterminé par le dispositif de commande (70).
